# EUROPÄISCHE PATENTSCHRIFT

(11) **EP 3 848 721 B1**
(45) Veröffentlichungstag und Bekanntmachung des Hinweises auf die Patenterteilung: **19.01.2022**
(21) Anmeldenummer: 20211396.5
(22) Anmeldetag: 03.12.2020
(51) Int. Cl.: G01S 7/481, G01S 17/89, G01S 17/10, H04Q 9/00, G01S 17/42

(54) **OPTOELEKTRONISCHER SENSOR UND VERFAHREN ZUR ERFASSUNG VON OBJEKTEN**
OPTOELECTRONIC SENSOR AND METHOD FOR DETECTING OBJECTS
CAPTEUR OPTOÉLECTRONIQUE ET PROCÉDÉ DE DÉTECTION DES OBJETS

(30) Priorität: 10.01.2020 DE 102020100452
(43) Veröffentlichungstag der Anmeldung: 14.07.2021
(73) Patentinhaber: SICK AG, 79183 Waldkirch (DE)
(72) Erfinder: Kerp, Michael, 79183 Waldkirch (DE); Mössner, Markus, 79115 Freiburg (DE)

(56) Entgegenhaltungen:
- EP-A1- 2 388 619
- EP-A1- 2 961 087
- US-A1- 2019 179 028

## Beschreibung

Die Erfindung betrifft einen optoelektronischen Sensor und ein Verfahren zur Erfassung von Objekten nach dem Oberbegriff von Anspruch 1 beziehungsweise 5.

Für Abstandsmessungen, die einen großen horizontalen Winkelbereich des Messsystems erforderlich machen, eignen sich optoelektronische Systeme und besonders Laserscanner. In einem Laserscanner überstreicht ein von einem Laser erzeugter Lichtstrahl mit Hilfe einer Ablenkeinheit periodisch einen Überwachungsbereich. Das Licht wird an Objekten in dem Überwachungsbereich remittiert und in dem Scanner ausgewertet. Aus der Winkelstellung der Ablenkeinheit wird auf die Winkellage des Objektes und aus der Lichtlaufzeit unter Verwendung der Lichtgeschwindigkeit zusätzlich auf die Entfernung des Objektes von dem Laserscanner geschlossen.

Mit den Winkel- und Entfernungsangaben ist der Ort eines Objektes in dem Überwachungsbereich in zweidimensionalen Polarkoordinaten erfasst. Damit lassen sich die Positionen von Objekten ermitteln oder durch mehrere Antastungen desselben Objekts an verschieden Stellen dessen Kontur bestimmen. Neben solchen Messanwendungen werden Laserscanner auch in der Sicherheitstechnik zur Überwachung einer Gefahrenquelle eingesetzt, wie sie beispielsweise eine gefährliche Maschine darstellt. Ein derartiger Sicherheitslaserscanner ist aus der DE 43 40 756 A1 bekannt. Dabei wird ein Schutzfeld überwacht, das während des Betriebs der Maschine vom Bedienpersonal nicht betreten werden darf. Erkennt der Laserscanner einen unzulässigen Schutzfeldeingriff, etwa ein Bein einer Bedienperson, so löst er einen Nothalt der Maschine aus. In der Sicherheitstechnik eingesetzte Sensoren müssen besonders zuverlässig arbeiten und deshalb hohe Sicherheitsanforderungen erfüllen, beispielsweise die Norm EN13849 für Maschinensicherheit und die Gerätenorm EN61496 für berührungslos wirkende Schutzeinrichtungen (BWS).

Die Abtastung der Überwachungsebene in einem Laserscanner wird üblicherweise dadurch erreicht, dass der Sendestrahl auf einen rotierenden Drehspiegel trifft. Lichtsender, Lichtempfänger sowie zugehörige Elektronik und Optik sind im Gerät fest montiert und vollziehen die Drehbewegung nicht mit. Es ist auch bekannt, den Drehspiegel durch eine mitbewegte Abtasteinheit zu ersetzten. Beispielsweise rotiert in der DE 197 57 849 B4 der gesamte Messkopf mit Lichtsender und Lichtempfänger.

Bei einem rotierenden Messkopf entsteht die Anforderung, Daten und Energie in den drehenden Teil zu übertragen beziehungsweise Daten aus dem drehenden Teil auszulesen. Dafür ist prinzipiell eine Vielzahl von Techniken denkbar. Eine Möglichkeit bietet die Hochfrequenztechnik. Die Trägerfrequenzerzeugung sowie die Modulation und Demodulation zur Datenübertragung benötigt Ressourcen beispielsweise auf einem FPGA (Field Programmable Gate Array), und es sind diverse weitere Bauteile erforderlich, wie HF-Filter, Nahfeldantennen und Leiterplatten. Es gibt zudem eine gewisse elektromagnetische Abstrahlung und umgekehrt Empfindlichkeit auf äußere elektromagnetische Felder. Störungen können auch durch Wechselwirkungen zwischen einer Energie- und eine Datenübertragung auftreten, wobei diese Einflüsse durch eine geschickte Auswahl des Frequenzbandes reduzierbar sind.

Die Komplexität einer Hochfrequenzschnittstelle ließe sich grundsätzlich durch am Markt verfügbare Mikrowellenchips reduzieren, in denen die komplette Hochfrequenztechnik mit oder ohne Antenne integriert ist. Das funktioniert aber nur über sehr kurze Distanzen, die nicht ausreicht, um den benötigten Abstand zwischen einem Basismodul und einem oder mehreren Sende-Empfangsmodulen zu überbrücken.

Allgemein bekannte Kommunikationsprotokolle wie Bluetooth oder WLAN erfordern länderspezifische Frequenzzulassungen, und außerdem ist die Reichweite für eine reine Punkt-zu-Punktverbindung innerhalb eines Laserscanners unerwünscht hoch, während die Datenrate limitiert bleibt. Mit anderen Worten passen für die besondere Situation in einem Laserscanner Leistung und Anforderung derartiger universeller Protokolle nicht gut zusammen.

Aus der EP 2 388 619 A1 ist ein Laserscanner mit drehbarer Sende-/Empfangseinheit bekannt, die nach dem Transformationsprinzip von den drehfesten Bereichen des Sensors mit Energie versorgt wird, während die Datenübertragung drahtlos per Funk oder auf optischem Wege erfolgt. Näher ausgeführt sind diese drahtlosen Schnittstellen dann aber nicht. Die WO 2008/008970 A2 stellt einen mehrstrahligen Laserscanner mit drehbarem Gehäuse mit einer Vielzahl von Lichtsendern und Lichtempfängern vor. Dabei ist eine drahtlose Kommunikation vorgesehen, die dann aber ebenfalls nicht näher beschrieben wird.

Die US 7 187 823 B2 beschreibt ein System zur Übertragung von Leistung und einem optischen Signal zwischen Komponenten eines Überwachungsgeräts. Dabei rotieren zwei Ringkerne zueinander, während die optische Übertragung durch Öffnungen in deren Zentrum erfolgt.

In der EP 2 933 655 A1 rotieren zwei Leiterplatten in einer Sockeleinheit und einer Abtasteinheit eines Laserscanners gegeneinander, um die Abtasteinheit induktiv zu versorgen und kapazitiv Daten auszutauschen. Die kapazitive Datenübertragung funktioniert wegen der sonst zu großen Signalverluste nur in diesem dichten Abstand der Leiterplatten, und eine hohe Bandbreite des Datenaustauschs stellt besondere Anforderungen im Hinblick auf Störemissionen und Störfestigkeit.

Die CN 205986584 U befasst sich mit einem Laserscanner, der drahtlose Leistungsübertragung nutzt. Dabei erfolgt auch eine gewisse Datenkommunikation, etwa um die zu übertragende Leistung optimal einzustellen. Ein Standard für die Leistungsübertragung wie der Qi-Standard ist jedoch für hohe Bandbreite beziehungsweise Datenrate nicht ausgelegt und nicht geeignet.

Die EP 2 961 087 A1 offenbart ein drahtloses Kommunikationssystem, in dem Sender beziehungsweise Empfänger als Dipolantenne oder Patchantenne ausgebildet sein können.

Daher ist Aufgabe der Erfindung, einen optoelektronischen Sensor mit verbesserter Datenkommunikation zwischen ruhendem und rotierendem Teil anzugeben.

Diese Aufgabe wird durch einen optoelektronischen Sensor und ein Verfahren zur Erfassung von Objekten nach Anspruch 1 beziehungsweise 5 gelöst. Der Sensor sendet mittels eines Lichtsenders einen Lichtstrahl aus und wandelt den aus dem Überwachungsbereich zurückkehrenden Lichtstrahl in einem Lichtempfänger in ein Empfangssignal um, das dann ausgewertet wird, um Eigenschaften der Objekte zu gewinnen. Dabei wird vorzugsweise mit einem Lichtlaufzeitverfahren ein Abstandswert bestimmt. Der Sensor kann auch mehrstrahlig sein, also mit mehreren Lichtsendern und/oder Strahlteilern oder dergleichen sowie mehreren Lichtempfängern oder auch einer Pixelmatrix mehrere Lichtstrahlen aussenden und empfangen.

Für eine periodische Abtastung des Überwachungsbereichs bewegt oder dreht sich eine Abtasteinheit gegenüber einer Sockeleinheit des Sensors. In der Abtasteinheit sind vorzugsweise Lichtsender und Lichtempfänger untergebracht, so dass die Abtasteinheit einen beweglichen oder drehenden Messkopf bildet. Die Bewegung wird durch einen Antrieb erzeugt, der eine Hohlwelle aufweist. Zur drahtlosen Kommunikation zwischen Sockeleinheit und Abtasteinheit durch die Hohlwelle sind eine erste und zweite Datenübertragungseinheit vorgesehen. Der Datenaustausch betrifft nicht lediglich einige Parameter, sondern vorzugsweise die Messdaten selbst. Dabei sind gewisse Verarbeitungsstufen schon in der Abtasteinheit denkbar, so dass je nach Ausführungsform die Empfangssignale selbst oder Auswertungsergebnisse verschiedenster Stufen übertragen werden, etwa die ermittelten Lichtlaufzeiten. Jedenfalls ist für die große Datenmenge der Messung eine Schnittstelle entsprechend hoher Bandbreite beziehungsweise Datenrate erforderlich.

Die Erfindung geht von dem Grundgedanken aus, die Daten per Mikrowelle zu übertragen. Dafür sind die Datenübertragungseinheiten als Mikrowelleneinheiten ausgebildet. Die Mikrowellensignale werden innerhalb der Hohlwelle übertragen.

Die Erfindung hat den Vorteil, dass per Mikrowelle wegen der großen zur Verfügung stehenden Bandbreite auf sehr geringem Raum innerhalb der Hohlwelle große Datenmengen übertragen werden können, die auch für die Messdaten eines Laserscanners ausreichen. Dabei ist mit minimaler Verbindungstechnik und wenigen benötigten Teilen ein einfacher und kostengünstiger Aufbau möglich. Ferner wird durch die Unterbringung in der Hohlwelle eine Abschirmung erzielt, die Abstrahlverhalten und Störempfindlichkeit gegenüber elektromagnetischen Wellen deutlich verbessert.

Die erste Datenübertragungseinheit und/oder die zweite Datenübertragungseinheit weist bevorzugt einen integrierten Mikrowellenkommunikationschip auf. Derartige Mikrowellenkommunikationschips sind als Fertigteile ("single chip") erhältlich und mit wenig Aufwand für die konkrete Anwendung adaptierbar, etwa in Verbindung mit einem FPGA oder einem Mikrocontroller der Steuer- und Auswertungseinheit. Es ist alternativ denkbar, Funktionalität der Datenübertragungseinheiten auf einer Leiterplatte, in einem FPGA oder Mikrocontroller der Steuer- und Auswertungseinheit unterzubringen.

Vorzugsweise ist in der Hohlwelle ein Hohlleiter angeordnet, nochmals bevorzugt als Rundhohlleiter. Die genannten Mikrowellenkommunikationschips haben originär nur wenige Millimeter Reichweite, die meist noch nicht ausreicht, um Sockeleinheit und Abtasteinheit zu verbinden. Durch den Hohlleiter wird die erforderliche Distanz überwunden. Der Hohlleiter kann mit der Sockeleinheit verbunden ruhen oder mit der Abtasteinheit rotieren. Auf der jeweiligen Gegenseite ist vorzugsweise ein kleiner Abstand vorgesehen, um die Bewegung zwischen Sockeleinheit und Abtasteinheit zuzulassen. Außen am Hohlleiter kann eine Energieübertragung angeordnet werden, die von der Datenübertragung gänzlich unabhängig ist. Prinzipiell ist alternativ zu einem gesonderten Hohlleiter in der Hohlwelle denkbar, dass die Hohlwelle selbst als Hohlleiter ausgebildet ist beziehungsweise fungiert. Das lässt aber weniger Flexibilität und Gestaltungsfreiraum für den Hohlleiter und schließt beispielsweise eine gesonderte Energieübertragung außerhalb des Hohlleiters und zugleich noch innerhalb der Hohlwelle aus.

Die erste Datenübertragungseinheit und/oder die zweite Datenübertragungseinheit ist für das Aussenden und/oder Empfangen von linear polarisierten Mikrowellensignalen ausgebildet. Das ermöglicht einen besonders einfachen Aufbau der Datenübertragungseinheiten beziehungsweise von deren Antennen. Am Markt erhältliche Mikrowellenkommunikationschips arbeiten ebenfalls mit linearer Polarisation.

In der Kommunikationsstrecke zwischen den Datenübertragungseinheiten, insbesondere in der Hohlwelle, ist mindestens ein Polarisator für die Wandlung linear polarisierter Mikrowellensignale in zirkular polarisierte Mikrowellensignals angeordnet. Bei der Verwendung linear polarisierter Mikrowellen ergibt sich wegen der Relativbewegung zwischen Sockeleinheit und Abtasteinheit das Problem, dass die Polarisationsrichtungen je nach Drehstellung nicht passen. Das führt zu einer drehstellungsabhängigen Dämpfung. Durch zirkulare Polarisation wird diese Abhängigkeit von der Drehstellung eliminiert und die Datenübertragung daher wesentlich robuster.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Schnittdarstellung durch einen Laserscanner;
- Fig. 2: eine vergrößerte Darstellung einer Mikrowellenübertragungsstrecke des Laserscanners innerhalb einer Hohlwelle des Antriebs; und
- Fig. 3: eine weitere Darstellung einer Mikrowellenübertragungsstrecke innerhalb einer Hohlwelle in einer Ausführungsform mit zusätzlichen Polarisatoren für zirkulare Polarisation.

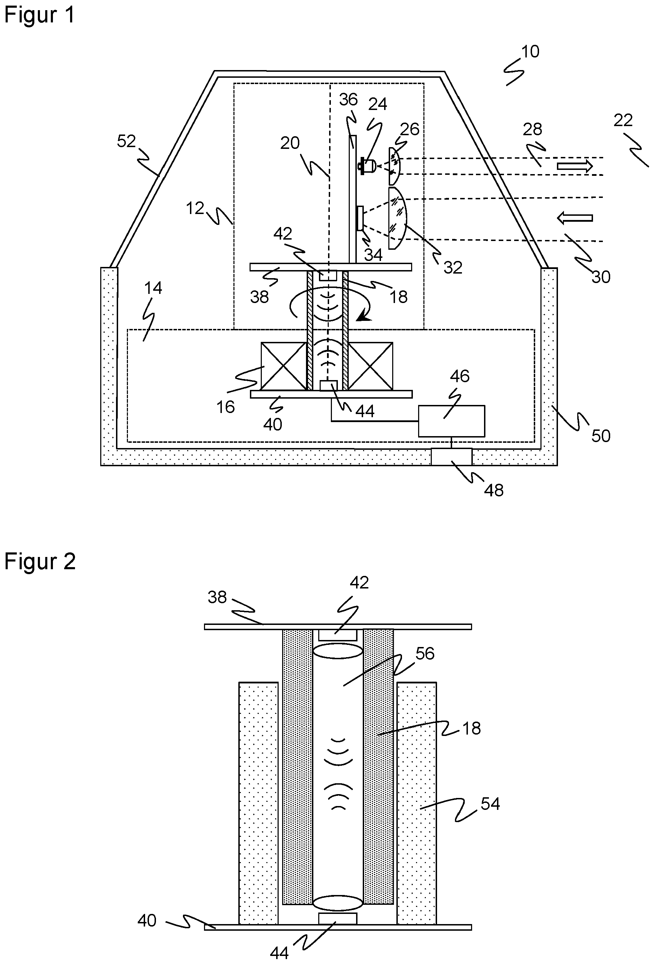

Fig. 1 zeigt eine schematische Schnittdarstellung durch einen optoelektronischen Sensor in einer Ausführungsform als Laserscanner 10. Der Laserscanner 10 umfasst in grober Aufteilung eine bewegliche Abtasteinheit 12 und eine Sockeleinheit 14. Die Abtasteinheit 12 ist der optische Messkopf, während in der Sockeleinheit 14 weitere Elemente wie eine Versorgung, Auswertungselektronik, Anschlüsse und dergleichen untergebracht sind. Im Betrieb wird mit Hilfe eines Antriebs 16 der Sockeleinheit 14, der als Hohlwellenantrieb mit einer Hohlwelle 18 ausgestaltet ist, die Abtasteinheit 12 in eine Schwing- oder Drehbewegung um eine Drehachse 20 versetzt, um so einen Überwachungsbereich 22 periodisch abzutasten.

In der Abtasteinheit 12 erzeugt ein Lichtsender 24 mit Hilfe einer Sendeoptik 26 einen Sendelichtstrahl 28, der in den Überwachungsbereich 22 ausgesandt wird. Trifft der Sendelichtstrahl 28 in dem Überwachungsbereich 22 auf ein Objekt, so kehrt ein entsprechender Lichtstrahl als remittiertes Licht 30 zu dem Laserscanner 10 zurück. Das remittierte Licht 30 wird von einer Empfangsoptik 32 auf einen Lichtempfänger 34 geführt und dort in ein elektrisches Empfangssignal gewandelt. Lichtsender 24 und Lichtempfänger 34 sind auf einer Leiterplatte 36 untergebracht, die mit einer weiteren Leiterplatte 38 verbunden oder damit beispielsweise als Flexplatine gemeinsam ausgebildet ist.

Parallel zu der Leiterplatte 38 der Abtasteinheit 12 ist, mit der Hohlwelle 18 dazwischen, eine Leiterplatte 40 der Sockeleinheit 14 vorgesehen. Auf den beiden Leiterplatten 38, 40 sind eine erste Datenübertragungseinheit 42 der Abtasteinheit 12 und eine zweite Datenübertragungseinheit 44 der Sockeleinheit 14 untergebracht, um mittels Mikrowellen durch die Hohlwelle 18 Daten zwischen Abtasteinheit 12 und Sockeleinheit 14 auszutauschen. Über diesen Kommunikationskanal steht eine Steuer- und Auswertungseinheit 46 in der Sockeleinheit 14 mit der Leiterplatte 38 und darüber mit der Leiterplatte 36 und somit Lichtsender 24 und Lichtempfänger 34 in Verbindung. Die Steuer- und Auswertungsfunktionalität kann weitgehend frei zwischen diesen Komponenten 36, 38, 40 und 46 verteilt sein und wird vereinfachend im Folgenden so beschrieben, als sei allein die Steuer- und Auswertungseinheit 46 dafür zuständig. Dementsprechend ist auch die Aufteilung in zwei Leiterplatten 36, 38 in der Abtasteinheit 12 ebenso wie deren Anordnung und Orientierung rein beispielhaft. Dort in der Abtasteinheit 12 könnte beispielsweise derjenige Teil der Aufwertung stattfinden, der sich auf eine Vorverarbeitung oder eine Rohdatenauswertung bezieht. Auch eine vollständige Messdatenauswertung in der Abtasteinheit 12 lediglich mit Kommunikation von Endergebnissen ist vorstellbar.

Die Steuer- und Auswertungseinheit 46 wertet das Empfangssignal aus, steuert den Antrieb 16 und erhält das Signal einer nicht gezeigten Winkelmesseinheit, welche die jeweilige Winkelstellung der Abtasteinheit 12 bestimmt. Zur Auswertung wird vorzugsweise mit einem Lichtlaufzeitverfahren die Distanz zu einem angetasteten Objekt gemessen. Dazu wird in einem phasenbasierten System das Sendelicht des Lichtsenders 24 moduliert und eine Phasenbeziehung zu dem Empfangssignal des Lichtempfängers 34 ausgewertet. Alternativ werden in einem pulsbasierten System kurze Lichtpulse zu einem Sendezeitpunkt ausgesandt, und aus dem Empfangssignal wird deren Empfangszeitpunkt ermittelt. Dabei sind sowohl Einzelpulsverfahren, die jeweils aus einem einzigen Sendepuls eine Entfernung bestimmen, als auch Pulsmittelungsverfahren denkbar, in denen das Empfangssignal nach einer Vielzahl aufeinanderfolgender Sendepulse gesammelt und statistisch ausgewertet wird. Die jeweilige Winkelstellung, unter welcher der Sendelichtstrahl 28 jeweils ausgesandt wurde, ist von der Winkelmesseinheit ebenfalls bekannt. Somit stehen nach jeder Scanperiode, also Umdrehung der Abtasteinheit 12, über den Winkel und die Entfernung zweidimensionale Polarkoordinaten aller Objektpunkte in einer Abtastebene zur Verfügung. In anderen Ausführungsformen mit mehreren Abtaststrahlen und/oder einer zusätzlichen Scanbewegung in Elevation entstehen auch dreidimensionale Koordinaten.

Diese Messergebnisse können über eine Sensorschnittstelle 48 ausgegeben werden. Die Sensorschnittstelle 48 oder ein weiterer, nicht gezeigter Anschluss dienen umgekehrt als Parametrierschnittstelle. Bei Anwendungen in der Sicherheitstechnik werden Schutzfelder, die in dem Überwachungsbereich 22 konfiguriert werden können, auf unzulässige Eingriffe überwacht, und daraufhin wird gegebenenfalls ein sicherheitsgerichtetes Abschaltsignal über die dann sicher ausgebildete Schnittstelle 48 (z.B. OSSD, Output Signal Switching Device) ausgegeben. Der Laserscanner 10 ist in einem Gehäuse 50 untergebracht, welches nach oben hin durch eine Haube 52 mit einer um die Drehachse 20 umlaufenden Frontscheibe abgeschlossen ist.

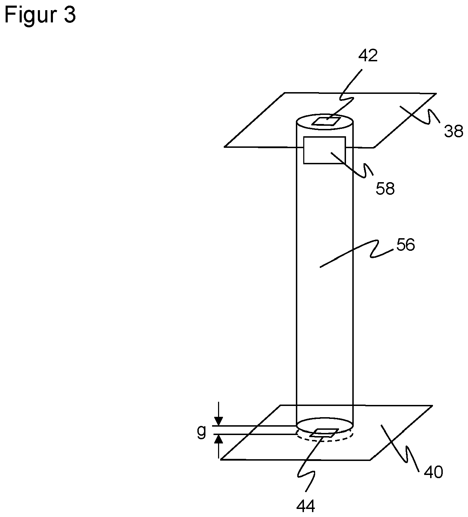

Der Laserscanner 10 gemäß Figur 1 ist nur ein Ausführungsbeispiel. Die Erfindung befasst sich weniger mit der konkreten Ausgestaltung des Laserscanners 10, sondern vielmehr mit der Datenübertragung per Mikrowelle durch die Hohlwelle 18, die unter Bezugnahme auf die Figuren 2 und 3 noch näher erläutert wird. Alternativ zu der konkreten Auslegung des Laserscanners 10 nach Figur 1 wäre jede andere an sich von einstrahligen optoelektronischen Sensoren oder Laserscannern bekannte Anordnung wie etwa eine Doppellinse mit Sendeoptik im Zentrum einer Empfangslinse oder die Verwendung eines Strahlteilerspiegels möglich. Ferner sind auch mehrstrahlige Laserscanner denkbar, in denen mehrere Lichtsender und/oder optische Strahlteilungen mehrere Sendelichtstrahlen erzeugen, die entsprechend von mehreren Lichtempfängern insbesondere in Form von pixelartig angeordneten Lichtempfangselementen eines Bildsensors empfangen werden. Vorteilhaft ist auch, jeweils mehrere Strahlen in einem Modul zusammenzufassen und eine größere Strahlzahl durch Mehrfachanordnungen solcher Module zu erreichen. In der Abtasteinheit 12 rotierende Erfassungsmodule können auch ohne Lichtlaufzeitmessung arbeiten, beispielsweise Kameramodule sein, oder nicht-optische Erfassungsprinzipien wie Radar oder Ultraschall verwenden.

Figur 2 zeigt die Kommunikationsstrecke zwischen den Leiterplatten 38, 40 und deren Datenübertragungseinheiten 42, 44 in vergrößerter Darstellung. Die Hohlwelle 18 bildet den Rotor des Antriebs 16 innerhalb eines Stators 54. Folglich rotiert die obere Leiterplatte 38 mit der Hohlwelle 18, während die untere Leiterplatte 40 mit dem Stator 54 ruht. Zur Übertragung der Mikrowellen zwischen den Datenübertragungseinheiten 42, 44 ist ein Hohlleiter 56 in der Hohlwelle 18 vorgesehen, vorzugsweise ein Rundhohlleiter. Alternativ fungiert die Hohlwelle 18 bereits selbst als Hohlleiter.

Die Datenübertragungseinheiten 42, 44 sind vorzugsweise voll integrierte Mikrowellenchips. Neben dem großen Vorteil, dass ein fertiges Bauteil verwendet werden kann, vereinfacht sich dadurch auch die Frequenzzulassung durch Übernahme vom jeweiligen Hersteller. Ein besonders interessantes Frequenzband liegt in dem lizenzfreien Bereich bei 60GHz oder 122 GHz, das auch weit von hohen Feldstärken in sonst genutzten niedrigeren Frequenzbereichen liegt und somit bezüglich EMV (elektromagnetische Verträglichkeit) Vorteile verspricht.

Die Mikrowellenchips können bereits integrierte Antennen aufweisen. Das macht die Anordnung noch kompakter. Alternativ sind Antenne und die Schaltungen zum Erzeugen, Empfangen, Modulieren und Demodulieren der Mikrowellen voneinander getrennt. Solche Antennen können beispielsweise als Patchantenne ausgeführt werden.

Ein Nachteil bei der Verwendung vorhandener integrierter Mikrowellenchips zur Datenübertragung ist deren geringe Reichweite von nur wenigen Millimetern, besonders im Falle integrierter Antennen. Das wird aber erfindungsgemäß durch den Hohlleiter 56 überwunden.

Figur 3 zeigt nochmals die Kommunikationsstrecke in einer weiteren Ausführungsform. Damit der Hohlleiter 56 die Drehbewegung der Abtasteinheit 12 mitvollziehen kann, ist eine kleine Lücke g zu der unteren Leiterplatte 40 der Sockeleinheit 14 vorgesehen. Die Anordnung könnte auch umgedreht werden, der Hohlleiter 56 also ruhen und mit der unteren Leiterplatte 40 verbunden werden, wobei dann vorzugsweise die entsprechende Lücke g oben zu der rotierenden Leiterplatte 38 verbleibt.

Bei der Verwendung linear polarisierter Mikrowellen ergibt sich ein Problem durch die sich ändernde Orientierung im Verlauf der Drehbewegung der Abtasteinheit 12. Die Datenübertragungseinheit 42, 44 sind nur in zwei Winkelstellungen geeignet um 0° beziehungsweise 180° zueinander ausgerichtet, um linear polarisierte Mikrowellen optimal zu übertragen. Bei einem 90°-Versatz dagegen entsteht eine extreme Dämpfung, weil die Mikrowellen genau mit der falschen Orientierung empfangen werden, also beispielsweise horizontal polarisierte Mikrowellen eintreffen, obwohl die empfangende Datenübertragungseinheit 42, 44 in diesem Moment für den Empfang vertikal polarisierter Mikrowellen orientiert ist. In den Zwischenstellungen ergeben sich entsprechende graduelle Dämpfungen.

Dies ließe sich beheben, indem zirkular polarisierte Mikrowellen verwendet werden. Das erfordert aber eine vergleichsweise komplexe Antennenstruktur. Insbesondere erzeugen die bevorzugt eingesetzten voll integrierten Mikrowellenchips üblicherweise linear polarisierte Mikrowellen. Daher ist es vorteilhaft, mindestens einen Polarisator 58 zu verwenden, der in die Hohlwelle 56 eingesetzt wird. Der Polarisator 58 wandelt eintreffende linear polarisierte Mikrowellen in zirkular polarisierte Mikrowellen, und daher können die Datenübertragungseinheiten 42, 44 selbst weiterhin für linear polarisierte Mikrowellen ausgebildet sein. Die Übertragung von Mikrowellen zwischen einem zirkular polarisierten Teilnehmer und einem linear polarisierten Teilnehmer verursacht eine Dämpfung von etwa 3dB. Dies ist jedoch hinnehmbar, zumal diese Konstellation den großen Vorteil hat, dass es keinen merklichen Signaleinbruch mehr gibt, die Datenübertragung also von der Drehstellung der Abtasteinheit 12 unabhängig wird und vor allem die extreme Dämpfung bei 90°-Versatz verhindert ist. Die Anordnung des Polarisators 58 bei der ersten Datenübertragungseinheit 42 ist rein beispielhaft zu verstehen, alternativ kann der Polarisator 58 bei der zweiten Datenübertragungseinheit 44 oder irgendwo dazwischen angeordnet sein. Auch mehrere Polarisatoren wären vorstellbar.

## Patentansprüche

1. Optoelektronischer Sensor (10) zur Erfassung von Objekten in einem Überwachungsbereich (22), insbesondere Laserscanner, der einen Lichtsender (24) zum Aussenden eines Lichtstrahls (28), einen Lichtempfänger (34) zum Erzeugen eines Empfangssignals aus dem von den Objekten in dem Überwachungsbereich (22) remittierten Lichtstrahls (30), eine Steuer- und Auswertungseinheit (46) zur Erfassung von Informationen über die Objekte anhand des Empfangssignals, eine Sockeleinheit (14), eine gegenüber der Sockeleinheit (14) beweglichen Abtasteinheit (12) zur periodischen Abtastung des Überwachungsbereichs (22) und einen Antrieb (16) mit einer Hohlwelle (18) zum Bewegen der Abtasteinheit (12) aufweist, wobei die Abtasteinheit (12) eine erste Datenübertragungseinheit (42) und die Sockeleinheit (14) eine zweite Datenübertragungseinheit (44) umfasst, um Daten zwischen Sockeleinheit (14) und Abtasteinheit (12) drahtlos durch die Hohlwelle (18) auszutauschen, insbesondere das Empfangssignal oder daraus abgeleitete Daten,
**dadurch gekennzeichnet,**
**dass** die erste Datenübertragungseinheit (42) und die zweite Datenübertragungseinheit (44) als Mikrowelleneinheiten zum Datenaustausch mittels Mikrowellensignalen ausgebildet sind, dass die erste Datenübertragungseinheit (42) und/oder die zweite Datenübertragungseinheit (44) für das Aussenden und/oder Empfangen von linear polarisierten Mikrowellensignalen ausgebildet ist und dass in der Kommunikationsstrecke zwischen den Datenübertragungseinheiten (42, 44) mindestens ein Polarisator (58) für die Wandlung linear polarisierter Mikrowellensignale in zirkular polarisierte Mikrowellensignale angeordnet ist.

2. Sensor (10) nach Anspruch 1,
wobei die erste Datenübertragungseinheit (42) und/oder die zweite Datenübertragungseinheit (44) einen integrierten Mikrowellenkommunikationschip aufweist.

3. Sensor (10) nach Anspruch 1 oder 2,
wobei in der Hohlwelle (18) ein Hohlleiter (56) angeordnet ist.

4. Sensor (10) nach Anspruch 3,
wobei der Polarisator (58) in der Hohlwelle (18) angeordnet ist.

5. Verfahren zur Erfassung von Objekten in einem Überwachungsbereich (22), bei dem ein Lichtstrahl (28) ausgesandt und aus dem von den Objekten in dem Überwachungsbereich (22) remittierten Lichtstrahl (30) ein Empfangssignal erzeugt und zur Erfassung von Informationen über die Objekte ausgewertet wird, wobei der Überwachungsbereich (22) periodisch abgetastet wird, indem sich eine Abtasteinheit (12) mittels eines Antriebs (16) mit einer Hohlwelle (18) relativ zu einer Sockeleinheit (14) bewegt, wobei zwischen Abtasteinheit (12) und Sockeleinheit (14) Daten mittels einer ersten Datenübertragungseinheit (42) und einer zweiten Datenübertragungseinheit (44) drahtlos durch die Hohlwelle (18) ausgetauscht werden,
**dadurch gekennzeichnet,**
**dass** die erste Datenübertragungseinheit (42) und die zweite Datenübertragungseinheit (44) Daten mittels Mikrowellensignalen austauschen, dass die erste Datenübertragungseinheit (42) und/oder die zweite Datenübertragungseinheit (44) linear polarisierte Mikrowellensignalen senden und/oder empfangen und dass in der Kommunikationsstrecke zwischen den Datenübertragungseinheiten (42, 44) mindestens ein Polarisator (58) linear polarisierte Mikrowellensignale in zirkular polarisierte Mikrowellensignale wandelt.

## Claims

1. An optoelectronic sensor (10) for detecting objects in a monitored area (22), in particular a laser scanner, comprising a light transmitter (24) for transmitting a light beam (28), a light receiver (34) for generating a received signal from the remitted light beam (30) remitted by the objects in the monitored area (22), a control and evaluation unit (46) for detecting information about the objects on the basis of the received signal, a base unit (14), a scanning unit (12) that is movable relative to the base unit (14) for periodically scanning the monitored area (22), and a drive (16) having a hollow shaft (18) for moving the scanning unit (12), wherein the scanning unit (12) comprises a first data transmission unit (42) and the base unit (14) comprises a second data transmission unit (44) for wirelessly exchanging data between the base unit (14) and the scanning unit (12) through the hollow shaft (18), in particular the received signal or data derived therefrom, **characterized in that** the first data transmission unit (42) and the second data transmission unit (44) are configured as microwave units for exchanging data by means of microwave signals, **in that** the first data transmission unit (42) and/or the second data transmission unit (44) is configured for transmitting and/or receiving linearly polarized microwave signals, and **in that** at least one polarizer (58) for converting linearly polarized microwave signals into circularly polarized microwave signals is arranged in the communication path between the data transmission units (42, 44).

2. The sensor (10) according to claim 1,
wherein the first data transmission unit (42) and/or the second data transmission unit (44) comprises an integrated microwave communication chip.

3. The sensor (10) according to claim 1 or 2,
wherein a waveguide (56) is arranged in the hollow shaft (18).

4. The sensor (10) according to claim 3,
wherein the polarizer (58) is arranged in the hollow shaft (18).

5. A method for detecting objects in a monitoring area (22), wherein a light beam (28) is transmitted and a received signal is generated from the remitted light beam (30) remitted by the objects in the monitoring area (22) and evaluated to detect information about the objects, wherein the monitoring area (22) is scanned periodically in that a scanning unit (12) moves relative to a base unit (14) by means of a drive (16) with a hollow shaft (18), data being exchanged wirelessly between the scanning unit (12) and the base unit (14) through the hollow shaft (18) by means of a first data transmission unit (42) and a second data transmission unit (44),
**characterized in that** the first data transmission unit (42) and the second data transmission unit (44) exchange data by means of microwave signals, **in that** the first data transmission unit (42) and/or the second data transmission unit (44) transmit and/or receive linearly polarized microwave signals, and **in that** at least one polarizer (58) converts linearly polarized microwave signals into circularly polarized microwave signals in the communication path between the data transmission units (42, 44).

## Revendications

1. Capteur optoélectronique (10) pour détecter des objets dans une zone de surveillance (22), en particulier un scanner laser, comprenant un émetteur de lumière (24) pour l'émission d'un rayon lumineux (28), un récepteur de lumière (34) pour la génération d'un signal de réception à partir du rayon lumineux (30) renvoyé par les objets dans la zone de surveillance (22), une unité de commande et d'évaluation (46) pour la détection d'informations sur les objets sur la base du signal de réception, une unité de base (14), une unité de balayage (12) mobile par rapport à l'unité de base (14) pour le balayage périodique de la zone surveillée (22), et un entraînement (16) avec un arbre creux (18) pour le déplacement de l'unité de balayage (12), l'unité de balayage (12) présentant une première unité de transmission de données (42) et l'unité de base (14) une deuxième unité de transmission de données (44) pour l'échange sans fil de données entre l'unité de base (14) et l'unité de balayage (12) par l'intermédiaire de l'arbre creux (18), en particulier du signal reçu ou de données dérivées de celui-ci,
**caractérisé en ce que** la première unité de transmission de données (42) et la deuxième unité de transmission de données (44) sont configurées comme des unités à micro-ondes pour l'échange de données au moyen de signaux à micro-ondes, **en ce que** la première unité de transmission de données (42) et/ou la deuxième unité de transmission de données (44) est configurée pour l'émission et/ou la réception de signaux à micro-ondes polarisés linéairement, et **en ce qu'**au moins un polariseur (58) pour la conversion de signaux à micro-ondes polarisés linéairement en signaux à micro-ondes polarisés circulairement est disposé dans le trajet de communication entre les unités de transmission de données (42, 44).

2. Capteur (10) selon la revendication 1,
dans lequel la première unité de transmission de données (42) et/ou la seconde unité de transmission de données (44) comprend une puce de communication micro-ondes intégrée.

3. Capteur (10) selon la revendication 1 ou 2,
dans lequel un guide d'ondes (56) est disposé dans l'arbre creux (18).

4. Capteur (10) selon la revendication 3,
dans lequel le polariseur (58) est disposé dans l'arbre creux (18).

5. Procédé pour détecter des objets dans une zone de surveillance (22), dans lequel un rayon lumineux (28) est émis et un signal de réception est généré à partir du rayon lumineux (30) réémis par les objets dans la zone de surveillance (22) et évalué pour détecter des informations sur les objets, dans lequel la zone de surveillance (22) est balayée périodiquement en ce qu'une unité de balayage (12) se déplace par rapport à une unité de base (14) au moyen d'un entraînement (16) avec un arbre creux (18), des données étant échangées sans fil entre l'unité de balayage (12) et l'unité de base (14) à travers l'arbre creux (18) au moyen d'une première unité de transmission de données (42) et d'une deuxième unité de transmission de données (44),
**caractérisé en ce que** la première unité de transmission de données (42) et la deuxième unité de transmission de données (44) échangent des données au moyen de signaux micro-ondes, **en ce que** la première unité de transmission de données (42) et/ou la deuxième unité de transmission de données (44) émettent et/ou reçoivent des signaux micro-ondes polarisés linéairement, et **en ce qu'**au moins un polariseur (58) convertit les signaux micro-ondes polarisés linéairement en signaux micro-ondes polarisés circulairement dans le chemin de communication entre les unités de transmission de données (42, 44).
